# FASCICULE DE BREVET EUROPEEN

(11) **EP 2 972 740 B1**
(45) Date de publication et mention de la délivrance du brevet: **29.05.2019**
(21) Numéro de dépôt: 14711470.6
(22) Date de dépôt: 12.03.2014
(51) Int. Cl.: G04G 21/08, G06F 3/02, G06F 3/01, G06F 1/16, H04M 1/05, H04M 1/725, G06F 3/041

(54) **PROCEDE, DISPOSITIF D'EMISSION, DISPOSITIF DE RECEPTION ET SYSTEME DE COMMUNICATION TACTILE**
ÜBERTRAGUNGSVERFAHREN UND VORRICHTUNG, EMPFANGSVORRICHTUNG UND TAKTILES KOMMUNIKATIONSSYSTEM
TRANSMISSION METHOD AND DEVICE, RECEIVING DEVICE AND TACTILE COMMUNICATION SYSTEM

(30) Priorité: 14.03.2013 FR 1352291
(43) Date de publication de la demande: 20.01.2016
(73) Titulaire: My Angel, 69400 Villefranche-sur-Saône (FR)
(72) Inventeur: ESPOSITO, Nicolas, F-60350 Vieux-moulin (FR); SEVERINI, Thibaud, F-60280 Margny Les Compiegne (FR)
(74) Mandataire: Cabinet Camus Lebkiri
(86) Numéro de dépôt international: PCT/EP2014/054800
(87) Numéro de publication internationale: WO 2014/140079

(56) Documents cités:
- US-A1- 2007 088 560
- US-A1- 2010 013 653
- US-B1- 8 344 862

## Description

### Domaine de l'invention

L'invention concerne un système et un procédé de communication tactile.

### Etat de l'art

Les êtres humains sont amenés à communiquer dans des environnements et des situations divers.

La communication peut être réalisée de façon sonore, par exemple orale. Ainsi il est possible à plusieurs individus de se parler directement ou par le biais de moyens de transmission sonores tels que des téléphones. Il est également possible de communiquer par des signaux sonores tels que des alarmes.

La communication peut être réalisée par des moyens visuels. Deux individus peuvent communiquer, s'ils se voient, en effectuant des signes. Il leur est également possible de communiquer indirectement par des moyens visuels tels qu'un terminal mobile d'un ordinateur portable.

La communication peut être à la fois sonore et visuelle, comme dans le cas des téléconférences.

Cependant, il existe des situations et des environnements dans lesquels la communication orale et/ou visuelle est dangereuse ou difficile, voire impossible.

Par exemple, il peut être dangereux pour une personne travaillant sur un chantier de détourner le regard de l'instrument qu'elle est en train d'utiliser ou de la zone au niveau de laquelle elle est en train de travailler. L'instrument peut être par exemple une grue ou un engin de démolition.

Les communications orales et visuelles peuvent poser des problèmes de distraction, donc de sécurité des individus.

Par ailleurs, dans une telle situation, le bruit de l'instrument et le bruit environnant sont tels qu'il n'est pas toujours possible de communiquer par oral. Pourtant il peut être nécessaire d'informer rapidement et efficacement un individu, en particulier en cas de danger imminent.

Alternativement, dans de telles situations, des moyens de communication orale et/ou visuelle peuvent être déjà mis en oeuvre, mais ne pas être suffisants pour communiquer efficacement certaines informations.

D'autres exemples peuvent être fournis par les secteurs de la recherche d'informations sur le terrain et de la sécurité. Un individu travaillant dans un tel secteur, par exemple un agent de sécurité ou un détective privé, peut avoir besoin de communiquer des informations en temps réel ou de demander une aide urgente.

Cette communication est généralement établie par une oreillette, éventuellement par des signes. Or les oreillettes sont d'un usage limité dans un environnement bruyant. Les signes sont d'une part peu discrets, et d'autre part peu pratiques car il faut pouvoir voir ou être vu de l'autre afin d'assurer la communication.

De telles communications peuvent être entendues ou observées par d'autres individus, ceux-là même à qui l'on souhaite dissimuler que l'on est en train de communiquer.

Les communications orales et visuelles nuisent ainsi à la discrétion, et peuvent entraîner des problèmes de sûreté. Pourtant il peut être essentiel d'échanger des informations précises et variées en rapport avec une situation urgente.

Les documents US 2010/013653 A1, US 2007/088560 A1 et US 8 344 862 B1 sont connus de l'état de la technique.

### Résumé de l'invention

Un but de l'invention est de pallier ces inconvénients. Un but de l'invention est en particulier de proposer un système et un procédé de communication adapté pour un environnement ne permettant pas de communication orale ou visuelle ou un environnement dans lequel une communication orale et/ou visuelle est déjà mise en oeuvre par ailleurs mais n'est pas suffisante au vu des besoins de communication.

A cet effet, il est prévu un procédé de communication tactile entre un premier dispositif de communication, et un deuxième dispositif de communication connectés entre eux, le premier dispositif comprenant des moyens d'acquisition de données contextuelles, le deuxième dispositif comprenant au moins un actionneur tactile, le procédé comprenant des étapes de :
- génération, par des moyens de traitement de données du premier dispositif, d'un message enrichi, le message enrichi présentant un squelette choisi parmi une pluralité de squelettes donnés, dans lequel est inséré au moins un attribut dont l'un représente une information de contexte issue des moyens d'acquisition de données contextuelles,
- transmission du message enrichi vers le deuxième dispositif, et
- commande par des moyens de traitement de données du deuxième dispositif dudit au moins un actionneur tactile de sorte à mettre en oeuvre une séquence comprenant :
   ∘ au moins un retour tactile spécifique du squelette, et
   ∘ au moins un retour tactile spécifique de chaque attribut.

L'invention est avantageusement complétée par les caractéristiques suivantes, prises seules ou en une quelconque de leurs combinaisons techniquement possibles :
- le premier dispositif et/ou le deuxième dispositif de communication est adapté pour être positionné au niveau d'une partie du corps d'une personne,
- le premier dispositif et/ou le deuxième dispositif comprend une pluralité d'actionneurs tactiles capables de stimuler des zones distinctes de la partie du corps,
- le premier dispositif et/ou le deuxième dispositif comprend au moins un capteur d'entrées tactiles, l'au moins un attribut comprenant un attribut représentant une information d'entrée tactile issue de l'au moins un capteur d'entrées tactiles lors d'une étape de détection d'au moins une entrée tactile,
- l'au moins un capteur d'entrées tactiles comprend une pluralité de capteurs d'entrées tactiles, les capteurs d'entrées tactiles étant superposés aux actionneurs tactiles par rapport aux zones distinctes de sorte à symétriser les entrées tactiles et les retours tactiles spécifiques de chaque attribut,
- l'attribut représentant une information de contexte est distinct de l'attribut représentant une information d'entrée tactile,
- l'au moins un retour tactile spécifique du squelette comprend un retour tactile de début de message et/ou un retour tactile de fin de message,
- l'au moins un retour tactile spécifique du squelette comprend au moins un retour tactile de séparation disposé entre les retours tactiles spécifiques,
- le procédé comprenant en outre une étape de ciblage du deuxième dispositif auquel transmettre le message riche parmi une pluralité de deuxièmes dispositifs.

L'invention concerne en outre un système de communication tactile comprenant :
- un premier dispositif de communication comprenant des moyens d'acquisition de données contextuelles,
- des moyens de traitement de données du premier dispositif,
- un deuxième dispositif de communication comprenant au moins un actionneur tactile,
- des moyens de traitement de données du deuxième dispositif,
les premier et deuxième dispositifs de communication étant connectés entre eux,
les moyens de traitement de données du premier dispositif de communication étant adaptés pour générer un message enrichi, présentant un squelette choisi parmi une pluralité de squelettes donnés, dans lequel est inséré au moins un attribut représentant une information de contexte issue des moyens d'acquisition de données contextuelles,
les moyens de traitement de données du deuxième dispositif étant adaptés pour :
- recevoir un message enrichi, et
- commander ledit actionneur tactile de sorte à mettre en oeuvre, une séquence comprenant au moins un retour tactile spécifique du squelette du message enrichi, et au moins un retour tactile spécifique de chaque attribut du message enrichi.

**L'invention concerne** en **outre** un dispositif d'émission de communication tactile pour la mise en oeuvre du procédé de communication selon l'un des modes de réalisation précédemment décrit, ledit dispositif d'émission comportant :
- au moins un moyen d'acquisition de données contextuelles ;
- des moyens de traitement de données pour la génération d'un message enrichi, ledit message enrichi présentant un squelette choisi parmi une pluralité de squelettes donnés, dans lequel est inséré au moins un attribut dont l'un représente une information de contexte issue des moyens d'acquisition de données contextuelles ;
- des moyens de transmission du message enrichi vers un dispositif de réception de communication tactile.

Selon un mode de réalisation supplémentaire, le dispositif d'émission est adapté pour être positionné au niveau d'une partie du corps d'une personne, il comprend une pluralité d'actionneurs tactiles capables de stimuler des zones distinctes de la partie du corps et il comprend au moins un capteur d'entrées tactiles, l'au moins un attribut comprenant un attribut représentant une information d'entrée tactile issue de l'au moins un capteur d'entrées tactiles, l'au moins un capteur d'entrées tactiles comprend une pluralité de capteurs d'entrées tactiles, les capteurs d'entrées tactiles étant superposés aux actionneurs tactiles par rapport aux zones distinctes de sorte à symétriser les entrées tactiles et les retours tactiles spécifiques de chaque attribut.

L'invention concerne en outre un dispositif de réception de communication tactile pour la mise en oeuvre du procédé de communication selon l'un des modes de réalisation précédemment décrits, ledit dispositif de réception comportant :
- des moyens de réception d'un message enrichi, ledit message enrichi présentant un squelette dans lequel est inséré au moins un attribut ;
- au moins un actionneur tactile ;
- des moyens de traitement de données pour la commande dudit au moins actionneur tactile, lesdits moyens de traitement de données étant adaptés pour mettre en oeuvre une séquence comprenant :
   ∘ au moins un retour tactile spécifique du squelette, et
   ∘ au moins un retour tactile spécifique de chaque attribut

Selon un mode de réalisation supplémentaire, le dispositif de réception est adapté pour être positionné au niveau d'une partie du corps d'une personne, il comprend une pluralité d'actionneurs tactiles capables de stimuler des zones distinctes de la partie du corps, il comprend au moins un capteur d'entrées tactiles, l'au moins un attribut comprenant un attribut représentant une information d'entrée tactile issue de l'au moins un capteur d'entrées tactiles, l'au moins un capteur d'entrées tactiles comprend une pluralité de capteurs d'entrées tactiles, les capteurs d'entrées tactiles étant superposés aux actionneurs tactiles par rapport aux zones distinctes de sorte à symétriser les entrées tactiles et les retours tactiles spécifiques de chaque attribut.

### Brève description des figures

D'autres caractéristiques et avantages de l'invention ressortiront encore de la description qui suit, laquelle est purement illustrative et non limitative et doit être lue en regard des dessins annexés sur lesquels :
- les figures 1a et 1b représentent schématiquement respectivement un premier et un deuxième dispositif de communication tactile d'un exemple de mode de réalisation de système de communication selon l'invention,
- la figure 2 représente schématiquement un premier dispositif de communication tactile d'un autre exemple de mode de réalisation de système de communication selon l'invention,
- les figures 3a et 3b représentent des bracelets formant respectivement un premier et un deuxième dispositif de communication tactile d'un exemple de mode de réalisation de système de communication selon l'invention,
- la figure 3c représente un dispositif combiné d'un premier dispositif de communication tactile et d'un deuxième dispositif de communication tactile d'un exemple de mode de réalisation de système de communication selon l'invention,
- la figure 4 représente un schéma d'un exemple de mode de réalisation de système de communication selon l'invention,
- la figure 5 représente un exemple de mode de réalisation de procédé de communication selon l'invention,
- la figure 6 représente un exemple de structure de message riche d'un exemple de mode de réalisation de procédé de communication selon l'invention,
- les figures 7a à 7f représentent des exemples d'entrées tactiles d'un exemple de mode de réalisation de procédé de communication selon l'invention,
- les figures 8a à 8e représentent des exemples de retours tactiles spécifiques d'un attribut représentant une information d'entrée tactile d'un exemple de mode de réalisation de procédé de communication selon l'invention,
- les figures 9a et 9b représentent des exemples de retours tactiles spécifiques d'un attribut représentant une information de contexte générée automatiquement d'un exemple de mode de réalisation de procédé de communication selon l'invention,
- les figures 10a à 10e représentent des exemples de retours tactiles spécifiques du squelette d'un message riche d'un exemple de mode de réalisation de procédé de communication selon l'invention,
- les figures 11a à 11d représentent des exemples de retours tactiles spécifiques d'un attribut représentant une information de contexte d'identification d'utilisateur d'un exemple de mode de réalisation de procédé de communication selon l'invention,
- les figures 12a à 12c illustrent un exemple de séquence d'un message riche d'un exemple de mode de réalisation de procédé de communication selon l'invention,
- la figure 13 représente un ordinogramme d'un exemple de génération et de transmission d'un message enrichi manuel d'un exemple de mode de réalisation de procédé de communication selon l'invention,
- la figure 14 représente un ordinogramme d'un exemple de génération et de transmission d'un message enrichi généré automatiquement d'un exemple de mode de réalisation de procédé de communication selon l'invention,
- la figure 15 représente un ordinogramme d'un exemple de génération de message enrichi d'un exemple de mode de réalisation de procédé de communication selon l'invention,

Les tables 1 et 2 représentent des exemples de scénarios de communications.

### Description détaillée de l'invention

### Exemples illustrant des modes de réalisation du système de communication

### Dispositifs de communication

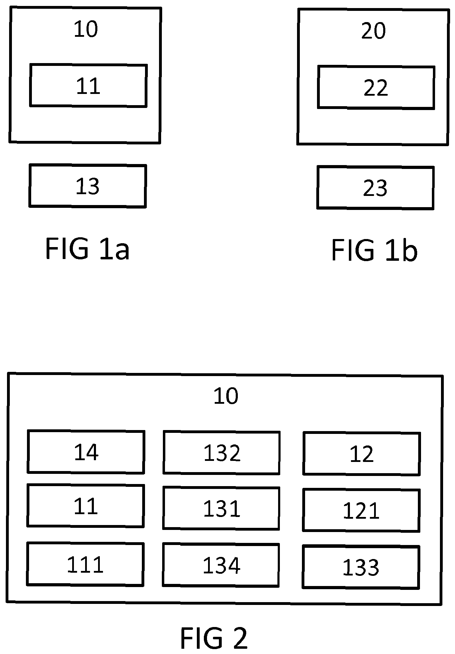

En référence à la figure 1a, un premier dispositif 10 de communication est décrit. Le premier dispositif 10 est par exemple un premier dispositif 10 d'un système de communication.

Le premier dispositif 10 comprend des moyens d'acquisition 11 de données contextuelles. Par données contextuelles on entend des données caractéristiques d'un contexte propre à l'environnement du premier dispositif 10 de communication et comprenant une information sur le contexte.

Les données contextuelles comprennent par exemple des données issues d'un capteur ou de plusieurs capteurs, par exemple des données mesurées telles qu'une température, une distance, une vitesse, une grandeur électrique, un niveau de luminosité, une pression, un niveau d'humidité, un niveau de rayonnement, par exemple d'un rayonnement ionisant.

Les données contextuelles peuvent comprendre des données propres au premier dispositif 10, par exemple une heure fournie par une horloge interne du premier dispositif 10, une identification du premier dispositif 10 ou de l'utilisateur correspondant, ou des informations liées à l'environnement présent ou passé du premier dispositif 10 et préalablement enregistrées par le premier dispositif 10.

Les moyens d'acquisition 11 de données contextuelles peuvent comprendre un module d'acquisition de données contextuelles.

Ainsi les moyens d'acquisition 11 de données contextuelles peuvent comprendre un dispositif de géolocalisation, par exemple un dispositif de type GPS, une boussole, un accéléromètre, ou tout autre dispositif adapté pour acquérir des données contextuelles.

Les données contextuelles peuvent comprendre des données issues d'un utilisateur du premier dispositif 10, par exemple de données mesurées au niveau de l'utilisateur, telles qu'un rythme cardiaque.

Les moyens d'acquisition de données contextuelles 11 comprennent par exemple un capteur de données contextuelles et/ou un dispositif d'acquisition de données contextuelles, par exemple un processeur et/ou une mémoire dédiés.

Des moyens de traitement 13 de données du premier dispositif 10, permettent par exemple de traiter des données issues du premier dispositif 10, par exemple des données comprenant les données contextuelles des moyens d'acquisition 11 de données contextuelles. Par moyens de traitement 13 de données du premier dispositif 10, on entend ainsi des moyens de traitement 13 de données, les données étant des données du premier dispositif 10 et/ou des données issues du premier dispositif 10. Ces moyens de traitement 13 de données du premier dispositif 10 peuvent être inclus au premier dispositif 10, tel que représenté figure 1a ou distincts du premier dispositif 10. Des moyens de traitement distincts du premier dispositif comprennent par exemple un serveur. Les moyens de traitement comprennent par exemple un système de calcul, et/ou un dispositif de calcul, et/ou un processeur.

En référence à la figure 2, un autre exemple de premier dispositif 10 comprenant des moyens d'acquisition de données contextuelles 11 est décrit.

Le premier dispositif 10 peut comprendre une mémoire 132, un processeur 131, une alimentation 134, telle qu'une batterie, et/ou tout autre élément adapté pour assurer le fonctionnement du premier dispositif 10 et en particulier pour former des moyens de traitement 13 des données du premier dispositif 10.

Le premier dispositif 10 peut comprendre un ou plusieurs composants de communication 133, par exemple pour une communication avec ou sans fil. De tels composants de communication 133 peuvent comprendre une puce de téléphonie mobile, par exemple une puce 3G.

Le premier dispositif 10 est ainsi adapté pour permettre le fonctionnement d'une application de communication.

Le premier dispositif 10 peut comprendre un ou plusieurs capteurs d'entrées tactiles 14, par exemple des boutons réagissant à une pression exercée par un utilisateur du premier dispositif 10, par exemple des capteurs résistifs, ou des capteurs capacitifs.

Le premier dispositif 10 peut comprendre d'autres moyens d'entrées 111 pour obtenir d'autres données.

Le premier dispositif 10 peut comprendre au moins un actionneur tactile 22. Par tactile, on entend utilisant une technologie relative au toucher. Ainsi, tout actionneur tactile décrit peut par exemple être un actionneur vibrotactile, par exemple un vibreur, ou selon un autre exemple, un actionneur haptique.

L'actionneur tactile 22 forme ainsi une sortie tactile.

Le deuxième dispositif 20 peut comprendre d'autre moyens de sorties 121 pour fournir des données.

En référence à la figure 1b, un deuxième dispositif 20 de communication est décrit. Le deuxième dispositif 20 est par exemple un deuxième dispositif 20 d'un système de communication.

Le deuxième dispositif 20 comprend au moins un actionneur tactile 22. L'actionneur tactile 22 est par exemple un vibreur.

Des moyens de traitement 23 de données du deuxième dispositif 20 permettent de traiter des données destinées au deuxième dispositif, par exemple à l'actionneur tactile 22. Par moyens de traitement 23 de données du deuxième dispositif 20, on entend ainsi des moyens de traitement 23 de données, les données étant des données du deuxième dispositif 20 et/ou des données destinées au deuxième dispositif 20. Ces moyens de traitement 23 de données du deuxième dispositif 20 peuvent être inclus au deuxième dispositif 20, tel que représenté figure 1b ou distincts du deuxième dispositif 20, ou présenter une partie incluse et une partie distincte. Les moyens de traitement comprennent par exemple un système de calcul, et/ou un dispositif de calcul, et/ou un processeur.

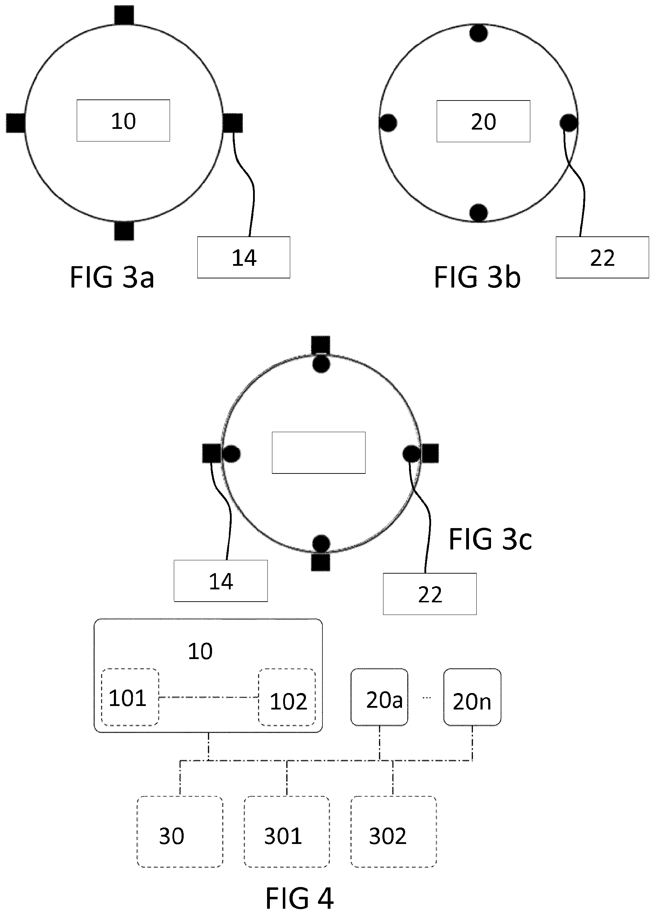

En référence à la figure 3a, le premier dispositif 10 peut être adapté pour être positionné au niveau d'une partie du corps d'une personne, par exemple d'un utilisateur du deuxième dispositif 20.Le premier dispositif 10 peut comprendre une pluralité de capteurs d'entrées tactiles 14.Le premier dispositif 10 a par exemple la forme d'une ceinture, d'un brassard, d'un collier, de chaussures, d'une veste, d'un chapeau, ou de tout autre objet adapté pour être positionné au niveau d'une partie du corps d'une personne, ou toute combinaison de tels objets. Le premier dispositif 10 a par exemple la forme d'un bracelet présentant sur son pourtour une pluralité de capteurs d'entrées tactiles 14, par exemple une pluralité de boutons.

En référence à la figure 3b, le deuxième dispositif 20 peut être adapté pour être positionné au niveau d'une partie du corps d'une personne, par exemple d'un utilisateur du deuxième dispositif 20. Le deuxième dispositif 20 peut comprendre une pluralité d'actionneurs tactiles 22 capables de stimuler des zones distinctes de la partie du corps. Le deuxième dispositif 20 a par exemple la forme d'une ceinture, d'un brassard, d'un collier, de chaussures, d'une veste, d'un chapeau, ou de tout autre objet adapté pour être positionné au niveau d'une partie du corps d'une personne, ou tout combinaison de tels objets. Un tel objet ou une telle combinaison d'objets peut être dédié(e) à cet effet, ou permettre d'autres fonctions. Le deuxième dispositif a par exemple la forme d'un bracelet présentant une pluralité d'actionneurs tactiles 22.

Le bracelet peut être un bracelet dédié à cet effet, ou un bracelet permettant d'autres fonctions, telles que celle de montre.

Le premier dispositif 10 ou le deuxième dispositif 20 peut comprendre une pluralité de capteurs d'entrées tactiles et une pluralité d'actionneurs tactiles capables de stimuler des zones distinctes de la partie du corps, formant ainsi un dispositif combiné, tel qu'illustré figure 3c, formant à la fois un premier dispositif 10 et un deuxième dispositif 20, et adapté pour communiquer avec un autre tel dispositif combiné. Le dispositif combiné peut présenter par exemple quatre vibreurs disposés chacun à égale distance du précédent et du suivant, de telle sorte à être disposés face à face deux à deux. Un tel bracelet combiné peut ainsi être adapté pour être porté au niveau d'un membre de l'utilisateur, les vibreurs étant adaptés pour stimuler quatre zones distinctes situés sur le pourtour du membre. Le bracelet combiné peut être adapté pour être disposé ou fixé au niveau d'un bras, par exemple au niveau d'un poignet, ou au niveau d'une jambe, par exemple au niveau d'une cuisse ou d'un mollet d'un utilisateur, ou encore au niveau du crâne, à la manière d'un bandeau, d'un utilisateur. Le dispositif combiné peut par exemple présenter une taille ajustable.

Un dispositif combiné ayant la forme d'un bracelet présente pour avantages d'être discret, peu encombrant, étanche, léger et confortable.

Dans un dispositif combiné les capteurs d'entrées tactiles peuvent être disposés au même niveau que la pluralité d'actionneurs tactiles, par rapport aux zones distinctes de sorte à symétriser des entrées tactiles et des retours tactiles spécifiques. Les capteurs d'entrées tactiles peuvent par exemple être superposés à la pluralité d'actionneurs tactiles. Chaque capteur d'entrées tactiles peut par exemple être superposé à un actionneur tactile distinct. La zone dans laquelle l'utilisateur doit exercer l'interaction tactile pour qu'un capteur d'entrées tactiles donnée est par exemple la zone dans laquelle est disposé l'actionneur tactile correspondant, par exemple uniquement à cet actionneur tactile.

Le premier dispositif 10 peut comprendre des éléments du deuxième dispositif 20 décrit ci-avant. De même le deuxième dispositif 20 peut comprendre des éléments du premier dispositif 10 décrit ci-avant.

Le premier dispositif 10 ou deuxième dispositif 20 peuvent être intégrés à ou former un dispositif de communication à distance tel qu'un téléphone mobile. Le premier dispositif 10 ou deuxième dispositif 20 peuvent former des dispositifs, chacun adapté pour former un dispositif distinct d'un dispositif de transmission et pouvant être connecté à celui-ci afin de communiquer avec d'autres dispositifs de communication. Le premier dispositif 10 ou deuxième dispositif 20 forme ainsi un accessoire tactile et/ou vibrant, par exemple un tel accessoire pouvant être connecté à un téléphone mobile.

Le premier dispositif 10 et le deuxième dispositif 20 sont connectés entre eux, c'est-à-dire qu'au moins le premier dispositif 10 est adapté pour envoyer des informations que le deuxième dispositif 20 est adapté pour recevoir, directement ou indirectement, par une connexion. Par connexion on entend tout moyen pour établir une liaison entre deux équipements, en particulier d'établir une liaison qui permet à un émetteur d'entrer en communication avec un récepteur. La connexion peut être une connexion avec ou sans fil. La connexion peut être réalisée au moyen d'ondes, par exemple des ondes radios. La connexion peut être réalisée selon une spécification de type Wi-Fi, ou Bluetooth. La connexion peut être réalisée au moyen d'un réseau, par exemple un réseau local tel qu'un réseau de type LAN ou un réseau étendu tel qu'un réseau de type WAN. La connexion peut présenter une architecture de pair à pair, client-serveur ou hybride. La connexion peut être une connexion de type émetteur-récepteur, par exemple émetteur-récepteur radio, par exemple une communication émetteur-récepteur radio portatif, par exemple de type talkie-walkie.

Les particularités des différents exemples de premier dispositif, de deuxième dispositif ou de dispositif combiné, ne sont pas limitées à ce dispositif et peuvent être appliquées et combinées de manière non limitative à un autre.

Il est ainsi possible d'obtenir un premier ou deuxième dispositif de communication discret. Un tel premier ou deuxième dispositif est de plus aisé à utiliser et à transporter, et peut être réalisé de manière simple.

### Système de communication

En référence à la figure 4, il est décrit un système de communication comprenant un premier dispositif 10 et au moins un deuxième dispositif 20. Le premier dispositif 10 peut comprendre un dispositif principal 101 comprenant des moyens de transmission, connecté, par exemple par une connexion filaire ou par un réseau local, à un dispositif tactile 102 comprenant les moyens d'acquisition 11 de données contextuelles.

Le système peut comprendre un serveur 30. Le serveur peut gérer des communications entre un premier dispositif 10 et un deuxième dispositif 20. Le serveur 30 peut par exemple permettre de cibler un deuxième dispositif 20 parmi plusieurs deuxièmes dispositifs 20a, ..., 20n possibles, n étant un nombre déterminé de deuxièmes dispositifs 20 du système, lors de l'envoi de données depuis le premier dispositif 10. Le serveur 30 peut par exemple stocker des données, notamment des historiques d'échanges. Le serveur 30 peut être omis dans le cas d'une configuration pair à pair. Le serveur peut comprendre les moyens de traitement 13 de données du premier dispositif.

Le système peut comprendre des moyens de calcul d'au moins un administrateur 301, par exemple un système de calcul, un dispositif de calcul et/ou un processeur. Ainsi, le système peut comprendre au moins un ordinateur d'au moins un administrateur 301. Le système peut comprendre des moyens de calcul d'au moins un superviseur 302, par exemple un système de calcul, un dispositif de calcul et/ou un processeur. Ainsi le système peut comprendre au moins un ordinateur d'au moins un superviseur 302. Alors que le premier dispositif 10 et/ou le deuxième dispositif 20 peuvent être adaptés pour être placés « sur le terrain », dans un environnement d'où le premier dispositif 10 peut acquérir des données contextuelles et le deuxième dispositif 20 peut les recevoir, le superviseur peut être positionné en retrait afin de surveiller le déroulement d'une session impliquant la communication entre et/ou avec au moins un premier dispositif 10 et/ou un deuxième dispositif 20. Les administrateurs peuvent assurer un service informatique et une gestion du système de communication.

Selon une possibilité, au moins un utilisateur d'un premier dispositif 10 et/ou d'un deuxième dispositif 20, l'au moins un superviseur et/ou l'au moins un administrateur peuvent ainsi opérer au niveau du même système pour réaliser une opération ou une mission donnée.

Les différents éléments du système sont connectés entre eux, par exemple par des moyens de connexion filaires ou sans fil.

Il est ainsi possible de communiquer de manière discrète du premier dispositif vers le deuxième dispositif. En particulier, cette communication ne nécessite pas de parler ou d'entendre. En particulier, cette communication ne nécessite pas de voir. En effet, la communication utilise seulement le toucher pour transmettre des informations.

De plus, il est ainsi possible de communiquer même si une communication orale et/ou visuelle n'est pas possible ou est difficile, ou si des moyens de communication orale et/ou visuelle existent déjà et sont utilisés pour à d'autres fins.

### Exemples illustrant des modes de réalisation du procédé de communication

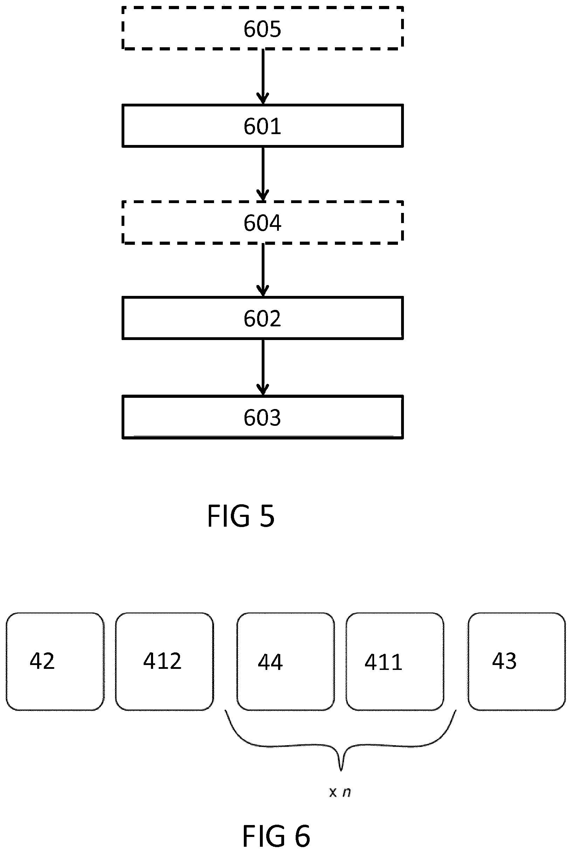

En référence à la figure 5, il est décrit un procédé de communication tactile entre un premier dispositif 10 de communication, et un deuxième dispositif 20 de communication connectés entre eux.

Le premier dispositif 10 comprenant des moyens d'acquisition (11) de données contextuelles. Le deuxième dispositif 20 comprend au moins un actionneur tactile 22. Le premier dispositif 10 et le deuxième dispositif 20 peuvent par exemple correspondre à ceux décrits précédemment.

### Exemples de situations

Comme indiqué précédemment, plusieurs situations possibles nécessitent une communication autre que par le son ou par les signes.

Ainsi la table 1 présente différents exemples de scénarios nécessitant une communication discrète. Ces scénarios concernent par exemples un contrôle de billet du point de vue de chefs de bord, une observation du point de vue de détectives privés, une surveillance et un contrôle du point de vue de vigiles.

La table 2 présente différents exemples de scénarios nécessitant une communication dans un environnement complexe, par exemple bruyant. Ces scénarios concernent par exemple un chantier du point de vue d'ouvriers y travaillant, plusieurs chantiers du point de vue de plusieurs groupes d'ouvriers, la présence d'un produit dangereux du point de vue d'opérateur devant le manipuler, ou une usine du point de vue d'opérateurs y effectuant des tâches.

Pour ces exemples, il peut être nécessaire pour un utilisateur d'un dispositif de communication d'envoyer un message comprenant des informations visant à alerter, signaler, indiquer une possibilité ou une impossibilité, demander une annulation, ou demander de répéter un message reçu. Il peut être nécessaire de recevoir des messages d'un autre utilisateur d'un dispositif de communication ou d'un tel dispositif de communication automatisé. Les messages peuvent comprendre une alerte, un signal, une possibilité ou une impossibilité, une demande d'annulation, ou une demande de répétition du message précédemment transmis.

### Génération d'un message enrichi

Le procédé comprend une étape de génération 601, par des moyens de traitement 13 de données du premier dispositif, d'un message enrichi 40.

Par message on entend un ensemble de données ou une communication destiné(e) à être transmis(e) par un support d'échange d'information d'un dispositif à un autre.

Le message enrichi présente un squelette choisi parmi une pluralité de squelettes donnés, dans lequel est inséré au moins un attribut, par exemple une pluralité d'attribut, dont l'un représente une information de contexte issue des moyens d'acquisition de données contextuelles 11.Le choix du squelette est par exemple réalisé en fonction du ou des attributs.

Par squelette on entend une structure de message ou un ensemble d'instructions pour former une telle structure, dont certaines parties peuvent être complétées ou particularisée à chaque emploi du squelette.

Par attribut on entend une information structurelle relative à une donnée, destinée à être inséré dans un squelette.

En référence à la figure 6, un exemple de structure de message riche est décrit. Le squelette comprend un marqueur de début 42 de message enrichi. Le squelette peut comprendre un marqueur de fin 43 de message enrichi. Le squelette peut comprendre un ou plusieurs marqueurs de séparation 44 entre des attributs, par exemple entre des attributs 411 représentant une information de contexte et/ou entre un attribut et un autre élément du message enrichi. Par exemple, une suite d'un marqueur de séparation 44 et d'un attribut 411 représentant une information de contexte peut être répétée plusieurs fois, « n fois » (x n).

En complément ou en remplacement des marqueurs de séparation 44, des éléments de pause peuvent être ajoutés entre des éléments du message enrichi, par exemple entre tous les éléments du message enrichi. En complément ou en remplacement du marqueur de début 42 ou du marqueur de fin 43, un élément de pause longue peut être ajouté pour séparer le message d'un éventuel autre message le précédant ou le suivant, selon les cas.

Le premier dispositif 10 peut être positionné au niveau d'une partie du corps d'une personne. Ainsi il est possible de générer des messages correspondant à l'environnement de cette personne. La personne peut par exemple être un utilisateur du premier dispositif.

Le premier dispositif 10 peut comprendre au moins un capteur d'entrées tactiles, par exemple une pluralité de capteurs d'entrées tactiles 14.

Le procédé peut alors comprendre d'une étape de détection 604 d'au moins une entrée tactile. Au moins un attribut peut alors être un attribut 412 représentant une information d'entrée tactile issue de l'au moins un capteur d'entrées tactiles 14, par exemple des capteurs d'entrées tactiles de la pluralité de capteurs d'entrées tactiles, lors de l'étape de détection 604 d'au moins une entrée tactile.

L'attribut 411 représentant une information de contexte peut être distinct de l'attribut 412 représentant une information d'entrée tactile. L'attribut 412 représentant une information d'entrée tactile peut être disposé entre le marqueur de début 42 et le premier marqueur de séparation 44 du message.

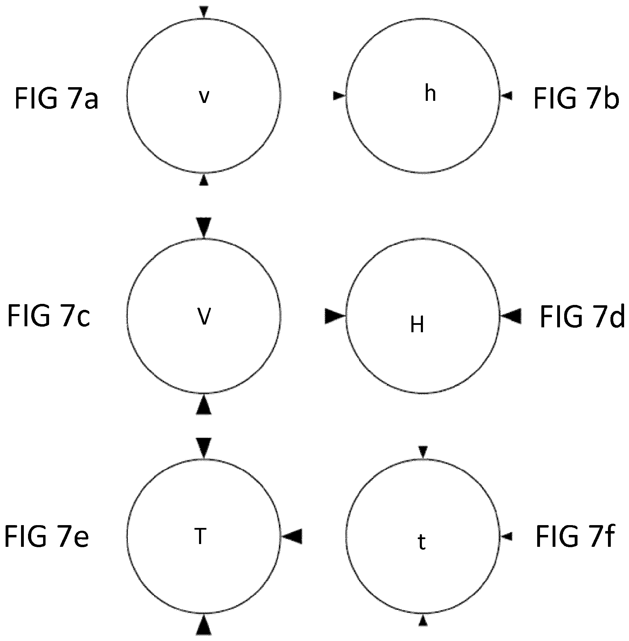

En référence aux figures 7a à 7f, des entrées tactiles au niveau de premiers dispositifs 10 tels que ceux des figures 3a et 3c sont décrites. Le premier dispositif 10 est par exemple un bracelet comprenant quatre capteurs d'entrées tactiles, par exemple quatre boutons. Les quatre capteurs d'entrées tactiles peuvent être disposés le long du bracelet, par exemple selon quatre orientations différentes dites haut, bas, droite et gauche.

En référence à la figure 7a, une entrée tactile, dite verticale courte ou v, est décrite. Les deux petites flèches pleines symbolisent deux entrées courtes simultanées des capteurs d'entrées tactiles haut et bas respectivement, formant l'entrée tactile v. Une telle entrée tactile v est par exemple associée à un attribut 412 d'alerte. Ainsi une telle entrée tactile v détectée lors de l'étape de détection 604 impliquera, lors de la génération d'un message, la présence d'un attribut 412 représentant une information tactile d'alerte.

En référence à la figure 7b, une entrée tactile, dite horizontale courte ou h, est décrite. Les deux petites flèches pleines symbolisent deux entrées courtes simultanées des capteurs d'entrées tactiles gauche et droit respectivement, formant l'entrée tactile h. Une telle entrée tactile h est par exemple associée à un attribut 412 de signalement.

En référence à la figure 7c, une entrée tactile, dite verticale longue ou V, est décrite. Les deux grandes flèches pleines symbolisent deux entrées longues simultanées des capteurs d'entrées tactiles haut et bas respectivement, formant l'entrée tactile V. Une telle entrée tactile V est par exemple associée à un attribut 412 de possibilité.

En référence à la figure 7d, une entrée tactile, dite horizontale longue ou H, est décrite. Les deux grandes flèches pleines symbolisent deux entrées longues simultanées des capteurs d'entrées tactiles gauche et droit respectivement, formant l'entrée tactile H. Une telle entrée tactile H est par exemple associée à un attribut 412 d'impossibilité.

En référence à la figure 7e, une entrée tactile, dite T, est décrite. Les trois grandes flèches pleines symbolisent trois entrées longues simultanées des capteurs d'entrées tactiles haut, bas et droit respectivement, formant l'entrée tactile T. Une telle entrée tactile T est par exemple associée à un attribut 412 d'annulation.

En référence à la figure 7f, une entrée tactile, dite t, est décrite. Les trois petites flèches pleines symbolisent trois entrées courtes simultanées des capteurs d'entrées tactiles haut, bas et droit respectivement, formant l'entrée tactile t. Une telle entrée tactile t est par exemple associée à un attribut 412 de demande de répétition.

Une telle génération permet d'obtenir des messages riches à partir d'entrées simples. En effet, une telle structure est efficace en ce qu'elle permet, à partir d'une entrée simple qu'est une donnée contextuelles, et éventuellement d'autres entrées, par exemple des entrées tactiles, de générer un message enrichi dont le squelette permet au destinataire de comprendre aisément l'information transmise.

### Transmission du message enrichi

Le procédé comprend une étape de transmission 602 du message enrichi 40 vers le deuxième dispositif 20, par exemple depuis le premier dispositif 10 vers le deuxième dispositif 20.

La transmission 602 peut être réalisée par un serveur 30, le serveur 30 pouvant connecter plusieurs dispositifs de communication, en particulier connecter un premier dispositif 10 à une pluralité de deuxièmes dispositifs.

Le procédé peut comprendre une étape de ciblage 605 du deuxième dispositif 20 auquel transmettre le message riche 40 parmi une pluralité de deuxièmes dispositifs.

### Mise en oeuvre d'une séquence

Le procédé comprend une étape de commande 603 par des moyens de traitement 23 de données du deuxième dispositif 20 dudit au moins un actionneur tactile 22 de sorte à mettre en oeuvre une séquence comprenant au moins un retour tactile spécifique du squelette, et au moins un retour tactile spécifique de chaque attribut.

Le deuxième dispositif 20 peut être positionné au niveau d'une partie du corps d'une personne. Le deuxième dispositif 20 peut alors comprendre une pluralité d'actionneurs tactiles 22 capables de stimuler des zones distinctes de la partie du corps. Il est alors possible pour l'utilisateur du deuxième dispositif de recevoir discrètement le message enrichi. Cela permet également à l'utilisateur du deuxième dispositif de recevoir le message enrichi et d'en comprendre la signification quel que soit l'environnement où il se trouve, par exemple même si l'environnement est bruyant, sombre, où que sa vue et/ou son ouïe doivent être attentif à l'environnement dans lequel il se trouve.

La présence d'une pluralité d'actionneurs tactiles 22 capables de stimuler des zones distinctes de la partie du corps peut permettre de saisir plus aisément encore des messages enrichis. En effet, il est ainsi possible d'obtenir une plus grande richesse de retour tactile, et ainsi de pouvoir présenter des informations plus complexes dans une séquence tactile plus courte dans le temps.

L'au moins un retour tactile spécifique du squelette peut comprendre un retour tactile de début de message et/ou un retour tactile de fin de message.

L'au moins un retour tactile spécifique du squelette peut comprendre au moins un retour tactile de séparation disposé entre les retours tactiles spécifiques.

Dans le cas d'un dispositif combiné présentant les caractéristiques d'un premier dispositif et d'un deuxième dispositif, les capteurs d'entrées tactiles peuvent être superposés à la pluralité d'actionneurs tactiles par rapport aux zones distinctes du corps de l'utilisateur, de sorte à symétriser les entrées tactiles et les retours tactiles spécifiques de chaque attribut.

Il est alors possible de créer une symétrie entre les entrées et les sorties. Par exemple, l'appui sur une combinaison de capteurs d'entrées tactiles pendant une courte période impliquera la création d'un message enrichi qui sera reçu par le deuxième dispositif qui fournira dans sa séquence un retour tactile impliquant la combinaison de capteurs tactiles correspondante pendant une période similaire. Ainsi l'utilisation du système de communication et du procédé de communication sont plus aisés et l'apprentissage associé plus rapide pour les utilisateurs car les entrées et les sorties présentent des similitudes.

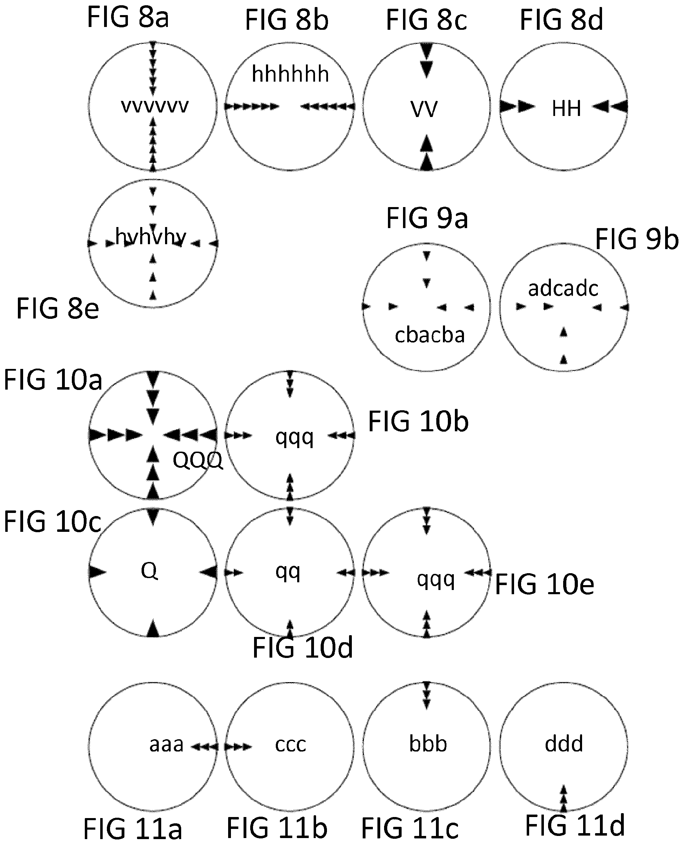

En référence aux figures 8a à 11d, des retours tactiles spécifiques au niveau du deuxième dispositif 20 tel que ceux des figures 3b et 3c sont décrits. Le deuxième dispositif 20 est par exemple un bracelet comprenant quatre actionneurs tactiles, par exemple quatre vibreurs. Les quatre actionneurs tactiles peuvent être disposés le long du bracelet, par exemple selon quatre orientations différentes dites haut, bas droite et gauche.

Pour des raisons de simplicité, on désignera par une lettre majuscule une vibration longue, par une lettre minuscule une vibration courte, par « a »une vibration de l'actionneur tactile droit, par « b » une vibration de l'actionneur tactile haut, par « c » une vibration de l'actionneur tactile gauche, par « d » une vibration de l'actionneur tactile bas, par « q » une vibration des quatre actionneurs tactiles simultanément, par « h » une vibration des actionneurs tactiles « a » et « c » simultanément, par « v » une vibration des actionneurs tactiles « b » et « d » simultanément, par « t » une vibration d'une combinaison quelconque de trois actionneurs tactiles, par « . » une pause courte des vibrations, et par « _ » une pause longue des vibrations.

En référence aux figures 8a à 12a, une grande flèche pleine au niveau d'un actionneur tactile symbolise un retour tactile long, par exemple une vibration longue, de cet actionneur tactile. De même une petite flèche pleine représente un retour tactile court.

En référence à la figure 8a, un retour tactile « vvvvvv », représente par exemple un attribut de teneur de message, par exemple un attribut correspondant à une entrée tactile, par exemple correspondant une alerte, est représenté. En référence à la figure 8b, un retour tactile « hhhhhh », correspondant par exemple à un signal, est représenté. En référence à la figure 8c, un retour tactile « VV », correspondant par exemple à une possibilité, est représenté. En référence à la figure 8d, un retour tactile « HH », correspondant par exemple à une impossibilité, est représenté. En référence à la figure 8e, un retour tactile « hvhvhv », correspondant par exemple à une annulation, est représenté.

En référence à la figure 9a, un retour tactile « cbacba », formant ainsi un retour tactile circulaire, correspondant par exemple à un premier type de message automatique, est représenté. En référence à la figure 9b, un retour tactile « adcadc », formant ainsi un retour tactile circulaire, correspondant par exemple à un deuxième type de message automatique, est représenté.

En référence à la figure 10a, un retour tactile « QQQ », correspondant par exemple à un retour tactile spécifique du squelette correspondant lui-même à un marqueur de début 42, est représenté. En référence à la figure 10b, un retour tactile « qqq », correspondant par exemple à un retour tactile spécifique du squelette correspondant lui-même à un marqueur de fin 43, est représenté. En référence à la figure 10c, un retour tactile « Q », correspondant par exemple à un retour tactile spécifique du squelette correspondant lui-même à un marqueur de séparation 44, est représenté.

En référence à la figure 10d, un retour tactile « qq », correspondant par exemple à un marqueur de confirmation, est représenté. En référence à la figure 10e, un retour tactile « qqq », correspondant par exemple à un marqueur de validation, est représenté.

En référence à la figure 11a, un retour tactile « aaa », correspondant par exemple à un attribut d'identification d'un utilisateur, par exemple à un premier agent, est représenté. En référence à la figure 11b, un retour tactile « ccc », correspondant par exemple à un deuxième agent, est représenté. En référence à la figure 11c, un retour tactile « bbb », correspondant par exemple à un superviseur, est représenté. En référence à la figure 11d, un retour tactile « ddd », correspondant par exemple à un attribut symbolisant que le message enrichi est un bilan, est représenté.

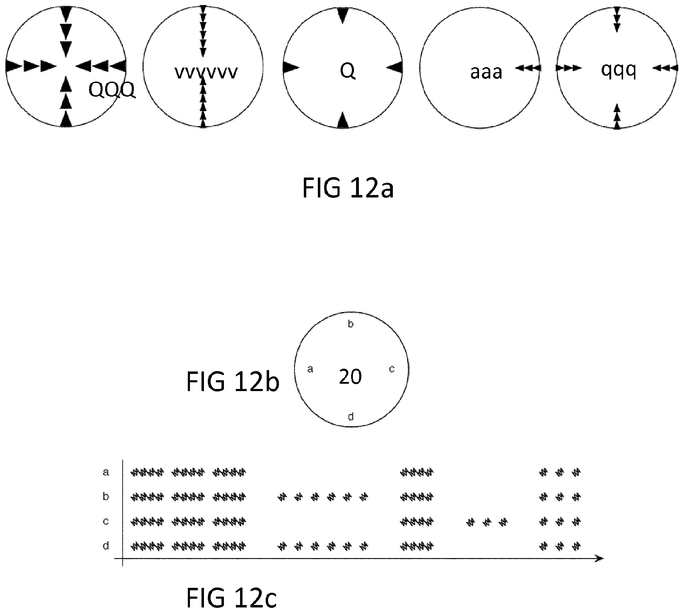

En référence aux figures 12a, 12b et 12c, un exemple de message tactile est représenté. Le message tactile est représenté figure 12a comme succession des retours tactiles des figures 10a, 8a, 10c, 11a et 10b, respectivement un retour tactile spécifique du squelette correspondant à un marqueur de début 42, un retour tactile spécifique d'un attribut représentant une information d'entrée tactile correspondant à une alerte, un retour tactile spécifique du squelette correspondant à un marqueur de séparation 44, un retour tactile spécifique.

La figure 12c représente les séquences de retours tactiles du message tactile de la figure 12a pour les quatre vibreurs a, b, c, d d'un deuxième dispositif 20 tel que représenté en figure 12b. Le deuxième dispositif 20 est par exemple similaire à ceux décrits aux figures 3b et 3c.

### Procédé de génération et de transmission de message enrichi issu d'entrée tactile

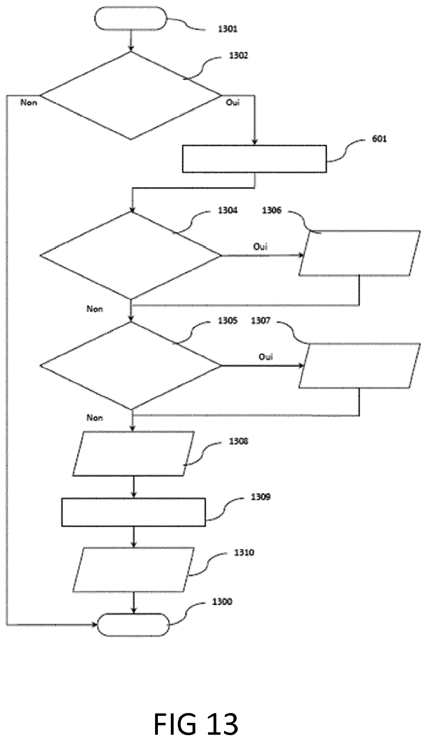

En référence à la figure 13, il est décrit un exemple de génération et de transmission d'un message enrichi du procédé de communication depuis un premier dispositif pour un système de communication tel que décrit précédemment. Le message enrichi peut être issu d'une entrée tactile d'un utilisateur du premier dispositif, l'entrée tactile manuelle ayant été détectée lors de l'étape de détection 605.

L'exemple de génération et la transmission peut être mis en oeuvre par les moyens de traitement 13 du premier dispositif.

Suite à une étape d'initialisation 1301, les moyens de traitement 13 déterminent lors d'une étape 1302 si une entrée tactile associée à un attribut représentant une information d'entrée tactile a été détectée lors de l'étape de détection 605 (non représentée) et, lorsqu'un mode de ciblage de destinataire est activé, si un destinataire a été précisé.

Si une telle entrée tactile n'a pas été détectée ou, lorsqu'un mode de ciblage de destinataire est activé, si un destinataire n'a été précisé, une étape 1300 de fin est mise en oeuvre et il n'y a pas de génération ni de transmission de message enrichi. L'étape de fin consiste par exemple à libérer et/ou réinitialiser une mémoire des moyens de traitement allouée, par exemple lors de l'étape d'initialisation, à la mise en oeuvre des étapes décrites.

Si une telle entrée tactile a été détectée et, lorsqu'un mode de ciblage de destinataire est activé, si un destinataire a été précisé, les moyens de traitement mettent en oeuvre l'étape de génération d'un message enrichi 601, puis les moyens de traitement déterminent si un mode de diffusion large est activé et si un destinataire a été précisé lors d'une étape 1304. Si le mode de diffusion large n'est pas activé ou qu'un destinataire a été précisé, les moyens de traitement déterminent si le mode de ciblage de destinataire est activé lors d'une étape 1305.

Si le mode de diffusion large est activé et qu'un destinataire n'a pas été précisé, suite à l'étape 1304, les moyens de traitement commandent la transmission du message enrichi à un ensemble d'utilisateurs prédéterminé lors d'une étape 1306, avant de mettre en oeuvre l'étape 1305. Cette étape 1306 correspond à une étape de commande de l'étape de transmission 602.

Si le mode de ciblage de destinataire est déterminé comme étant activé à l'étape 1305, les moyens de traitement commandent la transmission du message enrichi au destinataire précisé lors d'une étape 1307, avant de mettre en oeuvre une étape 1308. En effet, dans ce cas il a déjà été confirmé qu'un destinataire avait été précisé à l'étape 1302. Cette étape 1307 correspond à une étape de commande de l'étape de transmission 602.

Si le mode de ciblage de destinataire est déterminé comme n'étant pas activé à l'étape 1305, les moyens de traitement mettent directement en oeuvre l'étape 1308. L'étape 1308 consiste en la commande de la transmission du message enrichi à un superviseur du système de communication. Cette étape 1308 peut correspondre à une étape de commande de l'étape de transmission 602, si la transmission se fait à un deuxième dispositif 20 du superviseur.

Suite à l'étape 1308, les moyens de traitement enregistrent dans une mémoire la transmission du message enrichi au superviseur lors d'une étape 1309, et commandent lors d'une étape 1310 l'au moins un actionneur tactile du premier dispositif 10 de mettre en oeuvre un retour tactile de confirmation de transmission de message enrichi. Lors de l'étape 1309, au moins une éventuelle transmission selon l'étape 1306 et/ou 1307 peut également être enregistrée avant de mettre en oeuvre l'étape de fin 1300.

Il est ainsi possible de générer simplement des messages enrichis à partir d'entrées tactiles simples.

### Procédé de génération et de transmission d'un message enrichi généré automatiquement

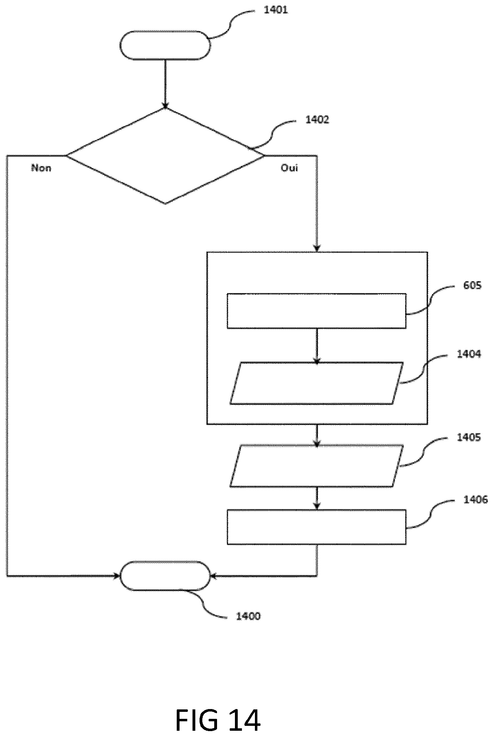

En référence à la figure 14, il est décrit un exemple de génération et de transmission d'un message enrichi du procédé de communication depuis un premier dispositif pour un système de communication tel que décrit précédemment. Le message enrichi peut être généré automatiquement à partir de données contextuelles issues des moyens d'acquisition de données contextuelles.

L'exemple de génération et la transmission peut être mis en oeuvre par les moyens de traitement 13 du premier dispositif.

Suite à une étape d'initiatisation 1401, les moyens de traitement mettent en oeuvre une étape 1402 de détermination des conditions de transmission automatique. Si les conditions de transmission automatique ne sont pas vérifiées, les moyens de traitement mettent en oeuvre l'étape de fin 1400. Si les conditions de transmission automatique sont vérifiées, les moyens de traitement mettent en oeuvre une étape de génération 605 de message enrichi et une étape 1404 de commande de la transmission du message enrichi. Les étapes 605 et/ou 1404 sont répétées si nécessaire de sorte qu'un message enrichi généré automatiquement peut être transmis à chacun des utilisateurs d'un ensemble d'utilisateurs de deuxième dispositif. Ainsi l'étape 605 de génération peut être réalisée une seule fois et l'étape 1404 de commande une seule fois, la commande visant la transmission à l'ensemble des utilisateurs. Alternativement, l'étape 1404 de commande peut être répétée pour chaque utilisateur. De même l'étape de génération 605 peut être répétée pour chaque utilisateur. Les moyens de traitement peuvent ensuite mettre en oeuvre une étape 1405 de transmission du message enrichi à un superviseur. Les moyens de traitement peuvent ensuite mettre en oeuvre une étape 1406 d'enregistrement dans une mémoire, par exemple dans un journal dédié, la transmission du message enrichi. Les moyens de traitement mettent ensuite en oeuvre l'étape de fin 1400.

Il est ainsi simple de gérer des messages enrichis générés automatiquement, par exemple lorsque le premier dispositif détecte un danger tel que le rapprochement dangereux d'un appareil de chantier contrôler par l'utilisateur d'un deuxième dispositif.

### Procédé de génération de message enrichi

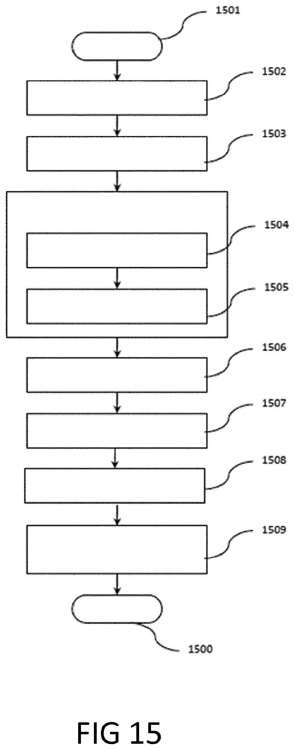

En référence à la figure 15, il est décrit un exemple de procédé de mise en oeuvre de l'étape de génération 601 de message enrichi. Le message enrichi est par exemple un message tel que décrit figure 6.

Le message enrichi peut être issu d'une entrée tactile d'un utilisateur du premier dispositif, l'entrée tactile manuelle ayant été détectée lors de l'étape de détection 605. Alternativement, le message enrichi peut être généré automatiquement à partir de données contextuelles issues des moyens d'acquisition de données contextuelles.

L'exemple de génération peut être mis en oeuvre par les moyens de traitement 13 du premier dispositif.

Suite à une étape 1501 d'initialisation, par exemple déclenchée par la détection d'une entrée tactile lors de l'étape de détection 605, les moyens de traitement peuvent mettre en oeuvre une étape 1502 d'initialisation d'un message. Cette étape peut être suivie d'une étape 1502 d'ajout d'un marqueur de début 42 de message enrichi par les moyens de traitement.

Les moyens de traitement peuvent ensuite mettre en oeuvre une étape 1504 d'ajout d'un marqueur de séparation 44 et une étape 1505 d'ajout d'un attribut, par exemple un attribut représentant une information de contexte ou un attribut représentant une information d'entrée tactile issue d'au moins un capteur d'entrée tactile 14. Les étapes 1504 et/ou 1505 peuvent être répétées afin d'ajouter autant de marqueurs de séparation 44 et/ou d'attributs que souhaité.

Les moyens de traitement peuvent ensuite mettre en oeuvre une étape 1506 d'ajout d'un marqueur de fin 43. Les moyens de traitement peuvent en outre mettre en oeuvre une étape 1507 d'ajout d'une pause, par exemple une pause longue, à la fin du squelette du message enrichi ainsi formé. Les moyens de traitement peuvent mettre en oeuvre une étape 1508 d'ajout entre des éléments du message enrichi, par exemple entre tous les éléments du message enrichi.

Les moyens de traitement mettent ensuite en oeuvre une étape de fin 1500. L'étape de fin consiste par exemple à libérer et/ou réinitialiser une mémoire des moyens de traitement allouée, par exemple lors de l'étape d'initialisation, à la mise en oeuvre des étapes décrites.

### Annexes

**Table 1**

| | **Chefs de bord** | **Détectives privés** | **Vigiles** |
|---|---|---|---|
| **Scénario** | Contrôle | Observation | Surveillance et contrôle |
| **Diffusion** | Oui | Oui | Oui |
| **Bilan** | Non | Non | Non |

| **ENTRÉES** | | | |
|---|---|---|---|
| **Alerter** | Je suis en danger | Il faut partir | Je suis en danger |
| **Signaler** | Il va falloir être deux | On peut y aller | Il va falloir être deux |
| **Possible** | Je peux venir | Je peux | Je peux venir |
| **Impossible** | Je ne peux pas venir | Je ne peux pas | Je ne peux pas venir |
| **Annuler** | J'annule | J'annule | J'annule |
| **Répéter** | Merci de répéter | Merci de répéter | Merci de répéter |
| **TOTAL** | 6 | 6 | 6 |

| **SORTIES** | | | |
|---|---|---|---|
| **Alerte** | Il est en danger | Il faut partir | Il est en danger |
| **Signal** | Il va falloir être deux | On peut y aller | Il va falloir être deux |
| **Possibilité** | Il peut venir | Il peut | Il peut venir |
| **Impossibilité** | Il ne peut pas venir | Il ne peut pas | Il ne peut pas venir |
| **Annulation** | Il annule | Il annule | Il annule |
| **Alerte automatique 1** | - | | Il est trop près |
| **Alerte automatique 2** | - | | Il est trop loin |
| **TOTAL** | 5 | 5 | 7 |

**Table 2**

| | **Ouvriers** | **Groupes d'ouvriers** | **Opérateurs** | **Opérateurs** |
|---|---|---|---|---|
| **Scénario** | Chantier | Plusieurs chantiers | En présence d'un produit dangereux | Dans une usine |
| **Diffusion** | Oui (alerte) ou non (signal) | Non | - | Non |
| **Bilan** | Non | Oui | - | Oui |

| **ENTRÉES** | | | | |
|---|---|---|---|---|
| **Alerter** | Tu es en danger (alerte + identification) | - | - | Je constate un danger |
| **Signaler** | J'ai besoin de toi (signal + identification) | - | - | - |
| **Possible** | OK | Bien reçu | Bien reçu | Bien reçu |
| **Impossible** | Je ne peux pas bouger | - | - | - |
| **Annuler** | J'annule | - | - | J'annule |
| **Répéter** | Merci de répéter | Merci de répéter | Merci de répéter | Merci de répéter |
| **TOTAL** | 6 + identifications | 2 | 2 | 4 |

| **SORTIES** | | | | |
|---|---|---|---|---|
| **Alerte** | Il y a un danger | - | - | Il y a un danger |
| **Signal** | Il a besoin de moi | - | - | - |
| **Possibilité** | OK | - | - | - |
| **Impossibilité** | Il ne peut pas bouger | - | - | - |
| **Annulation** | Il annule | - | - | - |
| **Alerte automatique 1** | - | Un ouvrier est trop proche d'un autre groupe | Le risque devient trop important | - |
| **Alerte automatique 2** | - | - | - | - |
| **TOTAL** | 5 | 1 | 1 | 1 |

## Revendications

1. Procédé de communication tactile entre un premier dispositif (10) de communication, et un deuxième dispositif (20) de communication connectés entre eux, le premier dispositif (10) comprenant au moins un moyen d'acquisition (11) de données contextuelles, le deuxième dispositif (20) comprenant au moins un actionneur tactile (22),
le procédé comprenant des étapes de :
- génération (601), par des moyens de traitement (13) de données du premier dispositif, d'un message enrichi (40), le message enrichi présentant un squelette (42, 43, 44) choisi parmi une pluralité de squelettes donnés, le squelette étant une structure de message comprenant au moins un marqueur de début (42) de message enrichi, dans laquelle est inséré, après le marqueur de début (42), au moins un attribut (411, 412) dont l'un représente une information de contexte issue des moyens d'acquisition de données contextuelles (11),
- transmission (602) du message enrichi (40) vers le deuxième dispositif (20), et
- commande (603) par des moyens de traitement (23) de données du deuxième dispositif (20) dudit au moins un actionneur tactile (22) de sorte à mettre en oeuvre une séquence comprenant :
∘ au moins un retour tactile spécifique du squelette (42, 43, 44), et
∘ au moins un retour tactile spécifique de chaque attribut (411, 412).

2. Procédé selon la revendication 1, dans lequel le premier dispositif (10) et/ou le deuxième dispositif (20) de communication est adapté pour être positionné au niveau d'une partie du corps d'une personne.

3. Procédé selon la revendication 2, dans lequel le premier dispositif (10) et/ou le deuxième dispositif (20) comprend une pluralité d'actionneurs tactiles (12, 22) capables de stimuler des zones distinctes de la partie du corps.

4. Procédé selon l'une des revendications 1 à 3, dans lequel le premier dispositif (10) et/ou le deuxième dispositif (20) comprend au moins un capteur d'entrées tactiles (14, 24), l'au moins un attribut comprenant un attribut (412) représentant une information d'entrée tactile issue de l'au moins un capteur d'entrées tactiles (14, 24) lors d'une étape de détection (604) d'au moins une entrée tactile.

5. Procédé selon la revendication 4, dans lequel l'au moins un capteur d'entrées tactiles comprend une pluralité de capteurs d'entrées tactiles (14, 24), les capteurs d'entrées tactiles (14, 24) étant superposés aux actionneurs tactiles (12, 22) par rapport aux zones distinctes de sorte à symétriser les entrées tactiles et les retours tactiles spécifiques de chaque attribut (41).

6. Procédé selon la revendication 4 ou 5, dans lequel l'attribut (411) représentant une information de contexte est distinct de l'attribut (412) représentant une information d'entrée tactile.

7. Procédé selon l'une des revendications 1 à 6, dans lequel l'au moins un retour tactile spécifique du squelette (42, 43) comprend un retour tactile de début de message et/ou un retour tactile de fin de message.

8. Procédé selon l'une des revendications 1 à 7, dans lequel l'au moins un retour tactile spécifique du squelette (44) comprend au moins un retour tactile de séparation disposé entre les retours tactiles spécifiques.

9. Procédé selon l'une des revendications 1 à 8, comprenant en outre une étape de ciblage (605) du deuxième dispositif (20) auquel transmettre le message riche (40) parmi une pluralité de deuxièmes dispositifs.

10. Dispositif d'émission (10) de communication tactile pour la mise en oeuvre du procédé de communication selon l'une quelconque des revendications 1 à 9, ledit dispositif d'émission comportant :
- au moins un moyen d'acquisition (11) de données contextuelles ;
- des moyens de traitement (13) de données pour la génération d'un message enrichi, ledit message enrichi présentant un squelette choisi parmi une pluralité de squelettes donnés, le squelette étant une structure de message comprenant au moins un marqueur de début (42) de message enrichi, dans laquelle est inséré, après le marqueur de début (42), au moins un attribut (411, 412) dont l'un représente une information de contexte issue des moyens d'acquisition de données contextuelles (11) ;
- des moyens de transmission du message enrichi vers un dispositif de réception de communication tactile.

11. Dispositif d'émission (10) selon la revendication précédente **caractérisé en ce qu'**il est adapté pour être positionné au niveau d'une partie du corps d'une personne, **en ce qu'**il comprend une pluralité d'actionneurs tactiles (12, 22) capables de stimuler des zones distinctes de la partie du corps et **en ce qu'**il comprend au moins un capteur d'entrées tactiles (14, 24), l'au moins un attribut comprenant un attribut (412) représentant une information d'entrée tactile issue de l'au moins un capteur d'entrées tactiles (14, 24), l'au moins un capteur d'entrées tactiles comprend une pluralité de capteurs d'entrées tactiles (14, 24), les capteurs d'entrées tactiles (14, 24) étant superposés aux actionneurs tactiles (12, 22) par rapport aux zones distinctes de sorte à symétriser les entrées tactiles et les retours tactiles spécifiques de chaque attribut (41).

12. Dispositif de réception (20) de communication tactile pour la mise en oeuvre du procédé de communication selon l'une quelconque des revendications 1 à 9, ledit dispositif de réception comportant :
- des moyens de réception d'un message enrichi, ledit message enrichi présentant un squelette (42, 43, 44), le squelette étant une structure de message comprenant au moins un marqueur de début (42) de message enrichi, dans laquelle est inséré, après le marqueur de début (42), au moins un attribut (411, 412) ;
- au moins un actionneur tactile (22)
- des moyens de traitement (23) de données pour la commande dudit au moins actionneur tactile, lesdits moyens de traitement de données étant adaptés pour mettre en oeuvre une séquence comprenant :
∘ au moins un retour tactile spécifique du squelette (42, 43, 44), et
∘ au moins un retour tactile spécifique de chaque attribut (411, 412).

13. Dispositif de réception (20) selon la revendication précédente **caractérisé en ce qu'**il est adapté pour être positionné au niveau d'une partie du corps d'une personne, **en ce qu'**il comprend une pluralité d'actionneurs tactiles (12, 22) capables de stimuler des zones distinctes de la partie du corps, et **en ce qu'**il comprend au moins un capteur d'entrées tactiles (14, 24), l'au moins un attribut comprenant un attribut (412) représentant une information d'entrée tactile issue de l'au moins un capteur d'entrées tactiles (14, 24), l'au moins un capteur d'entrées tactiles comprend une pluralité de capteurs d'entrées tactiles (14, 24), les capteurs d'entrées tactiles (14, 24) étant superposés aux actionneurs tactiles (12, 22) par rapport aux zones distinctes de sorte à symétriser les entrées tactiles et les retours tactiles spécifiques de chaque attribut (41).

14. Système de communication tactile **caractérisé en ce qu'**il comprend :
- le dispositif d'émission (10) selon la revendication 10,
- le dispositif de réception (20) selon la revendication 12,
- le dispositif d'émission (10) et le dispositif de réception (20) étant connectés entre eux.

## Patentansprüche

1. Taktiles Kommunikationsverfahren zwischen einer ersten Kommunikationsvorrichtung (10) und einer zweiten Kommunikationsvorrichtung (20), die aneinander angeschlossen sind, wobei die erste Vorrichtung (10) wenigstens ein Erwerbsmittel (11) von Kontextdaten umfasst, wobei die zweite Vorrichtung (20) wenigstens ein taktiles Stellglied (22) umfasst,
wobei das Verfahren die Schritte umfasst:
- Generieren (601) einer ersten angereicherten Nachricht (40) durch Datenverarbeitungsmittel (13) der ersten Vorrichtung, wobei die angereicherte Nachricht ein Skelett (42, 43, 44) aufweist, das aus einer Vielzahl von bestimmten Skeletten ausgewählt ist, wobei das Skelett eine Nachrichtenstruktur ist, umfassend wenigstens einen Anfangsmarker (42) der angereicherten Nachricht, in die nach dem Anfangsmarker (42) wenigstens ein Attribut (411, 412) eingefügt ist, von denen eines eine Kontextinformation darstellt, die aus den Erwerbsmitteln von Kontextdaten (11) stammt,
- Übertragung (602) der angereicherten Nachricht (40) auf die zweite Vorrichtung (20) und
- Steuerung (603) des genannten wenigstens einen taktilen Stellgliedes (22) durch Datenverarbeitungsmittel (23) der zweiten Vorrichtung (20) derart, dass eine Sequenz umgesetzt wird, umfassend:
∘ wenigstens eine spezifische taktile Rückmeldung des Skeletts (42, 43, 44) und;
∘ wenigsten eine spezifische taktile Rückmeldung jedes Attributs (411, 412).

2. Verfahren gemäß Anspruch 1, bei dem die erste Kommunikationsvorrichtung (10) und / oder die zweite Kommunikationsvorrichtung (20) geeignet ist, um auf der Höhe eines Teils des Körpers einer Person positioniert zu sein.

3. Verfahren gemäß Anspruch 2, bei dem die erste Vorrichtung (10) und / oder die zweite Vorrichtung (20) eine Vielzahl von taktilen Stellgliedern (12, 22) umfasst, die zur Stimulation der unterschiedlichen Bereiche des Teils des Körpers geeignet sind.

4. Verfahren gemäß einem der Ansprüche 1 bis 3, bei dem die erste Vorrichtung (10) und / oder die zweite Vorrichtung (20) wenigstens einen Sensor taktiler Eingaben (14, 24) umfasst, wobei wenigstens ein Attribut ein Attribut (412) umfasst, das eine taktile Eingabeinformation darstellt, die bei einem Detektionsschritt (604) wenigstens eines taktilen Eingabe aus dem wenigstens einen Sensor taktiler Eingaben (14, 24) stammt.

5. Verfahren gemäß Anspruch 4, bei dem der wenigstens eine Sensor taktiler Eingaben eine Vielzahl von Sensoren taktiler Eingaben (14, 24) umfasst, wobei die Sensoren taktiler Eingaben (14, 24) den taktilen Stellgliedern (12, 22) im Verhältnis zu den unterschiedlichen Bereichen derart überlagert sind, dass die taktilen Eingaben und die spezifischen taktilen Rückmeldungen jedes Attributs (41) symmetrisiert sind.

6. Verfahren gemäß Anspruch 4 oder 5, bei dem das genannte, eine Kontextinformation darstellende Attribut (411) von dem eine taktile Eingabeinformation darstellenden Attribut (412) unterschiedlich ist.

7. Verfahren gemäß einem der Ansprüche 1 bis 6, bei dem die wenigstens eine spezifische taktile Rückmeldung des Skeletts (42, 43) eine taktile Rückmeldung eines Nachrichtenanfangs und / oder eine taktile Rückmeldung eines Nachrichtenendes umfasst.

8. Verfahren gemäß einem der Ansprüche 1 bis 7, bei dem die wenigstens eine spezifische taktile Rückmeldung des Skeletts (44) wenigstens eine taktile Trennrückmeldung umfasst, die zwischen den spezifischen taktilen Rückmeldungen angeordnet ist.

9. Verfahren gemäß einem der Ansprüche 1 bis 8, umfassend darüber hinaus einen Targeting-Schritt (605) der zweiten Vorrichtung (20), auf die die reiche Nachricht (40) aus einer Vielzahl von zweiten Vorrichtungen übertragen wird.

10. Sendevorrichtung (10) zur taktilen Kommunikation für die Umsetzung des Kommunikationsverfahrens gemäß irgendeinem der Ansprüche 1 bis 9, wobei die genannte Sendevorrichtung umfasst:
- wenigstens ein Erwerbsmittel (11) von Kontextdaten;
- Datenverarbeitungsmittel (13) für die Erzeugung einer angereicherten Nachricht, wobei die genannte angereicherte Nachricht ein Skelett aufweist, das aus einer Vielzahl von bestimmten Skeletten ausgewählt ist, wobei das Skelett eine Nachrichtenstruktur ist, umfassend wenigstens einen Anfangsmarker (42) der angereicherten Nachricht, in die nach dem Anfangsmarker (42) wenigstens ein Attribut (411, 412) eingefügt ist, von dem eines eine Kontextinformation darstellt, die aus Erwerbsmitteln von Kontextdaten (11) stammt,
- Übertragungsmittel der angereicherten Nachricht auf eine Empfangsvorrichtung einer taktilen Kommunikation.

11. Sendevorrichtung (10) gemäß dem voranstehenden Anspruch, **dadurch gekennzeichnet, dass** sie geeignet ist, um auf der Höhe eines Teils des Körpers einer Person positioniert zu sein, dass sie eine Vielzahl von taktilen Stellgliedern (12, 22) umfasst, die geeignet sind, unterschiedliche Bereiche des Teils des Körpers zu stimulieren und dass sie wenigstens einen Sensor taktiler Eingaben (14, 24) umfasst, wobei das wenigstens eine Attribut ein Attribut (412) umfasst, das eine taktile Eingabeinformation darstellt, die aus dem wenigstens einen Sensor taktiler Eingaben (14, 24) stammt, der wenigstens eine Sensor taktiler Eingaben eine Vielzahl von Sensoren taktiler Eingaben (14, 24) umfasst, wobei die Sensoren taktiler Eingaben (14, 24) den taktilen Sensoren (12, 22) im Verhältnis zu den unterschiedlichen Bereichen derart überlagert sind, dass die taktilen Eingaben und die spezifischen taktilen Rückmeldungen jedes Attributs (41) symmetrisiert sind.

12. Empfangsvorrichtung (20) taktiler Kommunikation für die Umsetzung des Kommunikationsprodukts gemäß irgendeinem der Ansprüche 1 bis 9, wobei die genannte Empfangsvorrichtung umfasst:
- Empfangsmittel einer angereicherten Nachricht, wobei die genannte angereicherte Nachricht ein Skelett (42, 43, 44) aufweist, wobei das Skelett eine Nachrichtenstruktur ist, umfassend wenigstens einen Anfangsmarker (42) einer angereicherten Nachricht, in die nach dem Anfangsmarker (42) wenigstens ein Attribut (411, 412) eingefügt ist;
- wenigstens ein taktiles Stellglied (22),
- Datenverarbeitungsmittel (23) für die Steuerung des genannten wenigstens einen taktilen Stellgliedes, wobei die genannten Datenverarbeitungsmittel geeignet sind, um eine Sequenz umzusetzen, umfassend:
- wenigstens eine spezifische taktile Rückmeldung des Skeletts (42, 43, 44) und;
- wenigsten eine spezifische taktile Rückmeldung jedes Attributs (411, 412).

13. Empfangsvorrichtung (20) gemäß dem voranstehenden Anspruch, **dadurch gekennzeichnet, dass** sie geeignet ist, um auf der Höhe eines Teils des Körpers einer Person positioniert zu sein, dass sie eine Vielzahl von taktilen Stellgliedern (12, 22) umfasst, die geeignet sind, um die unterschiedlichen Bereiche des Teils des Körpers zu stimulieren und dass sie wenigstens einen Sensor taktiler Eingaben (14, 24) umfasst, wobei das wenigstens eine Attribut ein Attribut (412) umfasst, das eine taktile Eingabeinformation darstellt, die aus dem wenigstens einen Sensor taktiler Eingaben (14, 24) stammt, der wenigstens eine Sensor taktiler Eingaben umfasst eine Vielzahl von Sensoren taktiler Eingaben (14, 24), wobei die Sensoren taktiler Eingaben (14, 24) den taktilen Stellgliedern (12, 22) im Verhältnis zu den unterschiedlichen Bereichen derart überlagert sind, dass die taktilen Eingaben und die spezifischen taktilen Rückmeldungen jedes Attributs (41) symmetrisiert sind.

14. Taktiles Kommunikationssystem, **dadurch gekennzeichnet, dass** es umfasst:
- die Sendevorrichtung (10) gemäß Anspruch 10,
- die Empfangsvorrichtung (20) gemäß Anspruch 12,
- wobei die Sendevorrichtung (10) und die Empfangsvorrichtung (20) aneinander angeschlossen sind.

## Claims

1. Method of tactile communication between a first communication device (10), and a second communication device (20) connected together, the first device (10) comprising at least one means (11) of acquiring contextual data, the second device (20) comprising at least one tactile actuator (22), the method comprising steps of:
- generating (601), by data processing means (13) of the first device, an enriched message (40), the enriched message having a skeleton (42, 43, 44) chosen from a plurality of given skeletons, the skeleton being a message structure comprising at least one enriched message start marker (42), into which is inserted, after the start marker (42), at least one attribute (411, 412) of which one represents an item of context information from the means (11) of acquiring contextual data,
- transmitting (602) the enriched message (40) to the second device (20), and
- controlling (603) by the data processing means (23) of the second device (20) said at least one tactile actuator (22) so as to implement a sequence comprising:
∘ at least one item of tactile feedback specific to the skeleton (42, 43, 44), and
∘ at least one item of tactile feedback specific to each attribute (411, 412).

2. Method according to claim 1, wherein the first communication device (10) and/or the second communication device (20) is suitable for being positioned on a portion of the body of a person.

3. Method according to claim 2, wherein the first device (10) and/or the second device (20) comprises a plurality of tactile actuators (12, 22) able to stimulate distinct zones of the portion of the body.

4. Method according to one of claims 1 to 3, wherein the first device (10) and/or the second device (20) comprises at least one tactile input sensor (14, 24), with the at least one attribute comprising an attribute (412) representing an item of tactile input information from the at least one tactile input sensor (14, 24) during a step of detecting (604) at least one item of tactile input.

5. Method according to claim 4, wherein the at least one tactile input sensor comprises a plurality of tactile input sensors (14, 24), with the tactile input sensors (14, 24) being superposed on the tactile actuators (12, 22) with respect to the distinct zones in such a way as to balance the items of tactile input and the items of tactile feedback specific to each attribute (41).

6. Method according to claim 4 or 5, wherein the attribute (411) representing an item of context information is distinct from the attribute (412) representing an item of tactile input information.

7. Method according to one of claims 1 to 6, wherein the at least one item of tactile feedback of the skeleton (42, 43) comprises an item of tactile feedback of the start of a message and/or an item of tactile feedback of the end of a message.

8. Method according to one of claims 1 to 7, wherein the at least one item of tactile feedback of the skeleton (44) comprises at least one item of tactile feedback of separation arranged between the specific items of tactile feedback.

9. Method according to one of claims 1 to 8, further comprising a step of targeting (605) of the second device (20) to which transmit the rich message (40) from among a plurality of second devices.

10. Tactile communication transmission device (10) for implementing the method of communication according to any of claims 1 to 9, said transmission device comprising:
- at least one means (11) of acquiring contextual data;
- data processing means (13) for the generating of an enriched message, said enriched message having a skeleton chosen from a plurality of given skeletons, the skeleton being a message structure comprising at least one enriched message start marker (42), wherein is inserted, after the start marker (42), at least one attribute (411, 412) of which one represents an item of context information from the means for acquiring contextual data (11);
- means for transmitting the enriched message to a tactile communication receiving device.

11. Transmission device (10) as claimed in the preceding claim **characterised in that** it is suitable for being positioned on a portion of the body of a person, **in that** it comprises a plurality of tactile actuators (12, 22) able to stimulate distinct zones of the portion of the body and **in that** it comprises at least one tactile input sensor (14, 24), the at least one attribute comprising an attribute (412) representing an item of tactile input information from the at least one tactile input sensor (14, 24), the at least one tactile input sensor comprises a plurality of tactile input sensors (14, 24), the tactile input sensors (14, 24) being superposed on the tactile actuators (12, 22) with respect to the distinct zones in such a way as to balance the items of tactile input and the items of tactile feedback specific to each attribute (41).

12. Tactile communication receiving device (20) for implementing the method of communication according to any of claims 1 to 9, said receiving device comprising:
- means for receiving an enriched message, said enriched message having a skeleton (42, 43, 44), the skeleton being a message structure comprising at least one enriched message start marker (42), wherein is inserted, after the start marker (42), at least one attribute (411, 412);
- at least one tactile actuator (22);
- data processing means (23) for the controlling of said at least one tactile actuator, said data processing means being suitable for implementing a sequence comprising:
∘ at least one item of tactile feedback specific to the skeleton (42, 43, 44), and
∘ at least one item of tactile feedback specific to each attribute (411, 412).

13. Receiving device (20) as claimed in the preceding claim **characterised in that** it is suitable for being positioned on a portion of the body of a person, **in that** it comprises a plurality of tactile actuators (12, 22) able to stimulate distinct zones of the portion of the body, and **in that** it comprises at least one tactile input sensor (14, 24), the at least one attribute comprising an attribute (412) representing an item of tactile input information from the at least one tactile input sensor (14, 24), the at least one tactile input sensor comprises a plurality of tactile input sensors (14, 24), the tactile input sensors (14, 24) being superposed on the tactile actuators (12, 22) with respect to the distinct zones in such a way as to balance the items of tactile input and the items of tactile feedback specific to each attribute (41).

14. Tactile communication system **characterised in that** it comprises:
- the transmission device (10) according to claim 10,
- the receiving device (20) according to claim 12,
- the transmission device (10) and the receiving device (20) being connected together.
